(19) Europäisches Patentamt
European Patent Office
Office européen des brevets

(11) **EP 3 628 072 B1**

(12) **FASCICULE DE BREVET EUROPEEN**

(45) Date de publication et mention de la délivrance du brevet:
**14.09.2022 Bulletin 2022/37**

(21) Numéro de dépôt: **19742628.1**

(22) Date de dépôt: **29.07.2019**

(51) Classification Internationale des Brevets (IPC):
**G01S 19/25** (2010.01)    **G01S 19/47** (2010.01)
**G01S 19/26** (2010.01)    **G01S 19/14** (2010.01)
**G01S 19/49** (2010.01)    **G01S 19/24** (2010.01)
**F42B 10/26** (2006.01)    **F42B 15/01** (2006.01)
**F41G 7/22** (2006.01)    **F41G 7/30** (2006.01)
**F41G 7/34** (2006.01)

(52) Classification Coopérative des Brevets (CPC):
**G01S 19/254; F42B 15/01; G01S 19/26;**
**G01S 19/47;** F41G 7/305; F41G 7/346; G01S 19/14;
G01S 19/24; G01S 19/49

(86) Numéro de dépôt international:
**PCT/EP2019/070315**

(87) Numéro de publication internationale:
**WO 2020/025518 (06.02.2020 Gazette 2020/06)**

(54) **PROCÉDÉ ET DISPOSITIF DE LOCALISATION D'UN OBJET MOBILE SOUMIS À UNE DYNAMIQUE DE ROTATION SUR LUI-MÊME**

VERFAHREN UND VORRICHTUNG ZUR ORTUNG EINES BEWEGTEN OBJEKTS, DAS AUF SEINER EIGENEN ACHSE DREHDYNAMIK AUSGESETZT IST

METHOD AND DEVICE FOR LOCATING A MOVING OBJECT SUBJECTED TO ROTATIONAL DYNAMICS ON ITS OWN AXIS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.07.2018 FR 1857099**

(43) Date de publication de la demande:
**01.04.2020 Bulletin 2020/14**

(73) Titulaire: **Airbus Defence and Space SAS**
**31402 Toulouse Cedex 4 (FR)**

(72) Inventeur: **HENNART, Florent**
**31402 Toulouse Cedex 04 (FR)**

(74) Mandataire: **Ipside**
**6, Impasse Michel Labrousse**
**31100 Toulouse (FR)**

(56) Documents cités:
**US-A1- 2005 114 023     US-A1- 2007 118 286**

**Description**

## DOMAINE TECHNIQUE

La présente invention appartient au domaine de la localisation par satellite. Notamment, l'invention concerne un dispositif de localisation permettant de conserver des moyens de localisation d'un objet mobile sur lequel il est embarqué même lorsque ledit objet mobile présente une forte dynamique de rotation sur lui-même.

## ÉTAT DE LA TECHNIQUE

Une perte de contrôle d'un lanceur destiné à lancer un engin spatial dans l'espace extra-atmosphérique peut être provoquée par un dysfonctionnement au niveau de la propulsion du lanceur. Lors d'un tel événement, il est précieux de récolter un maximum d'informations avant d'exécuter l'ordre d'autodestruction du lanceur. Il convient donc de conserver des moyens de localisation du lanceur aussi longtemps que possible, même lorsque ce dernier est en condition dégradée, et notamment lorsque le lanceur se met par exemple en rotation autour de l'un de ses axes transverses suite à un dysfonctionnement de la propulsion.

Le lanceur peut être équipé d'un récepteur d'un système de positionnement par satellites (GNSS, de l'anglais « Global Navigation Satellite System ») pour déterminer la position et la vitesse de déplacement du lanceur.

L'antenne d'un tel récepteur GNSS est généralement située dans une baie avionique à plusieurs mètres au-dessus du centre d'inertie du lanceur. Suite à un dysfonctionnement de la propulsion, le mouvement du lanceur peut provoquer une forte dynamique en rotation au niveau de l'antenne en raison du bras de levier existant entre le centre d'inertie du lanceur et l'antenne. Sous cette dynamique, une variation importante de l'effet Doppler subi par un signal émis par un satellite du système GNSS et reçu par l'antenne du récepteur peut être observée. Aussi, la visibilité du signal par l'antenne du récepteur peut être interrompue à chaque rotation.

Dans de telles conditions, les signaux des satellites du système GNSS sont régulièrement perdus, et les récepteurs GNSS conventionnels ne permettent généralement plus de déterminer convenablement la position du lanceur.

Certains dispositifs de localisation mettent en œuvre à la fois un récepteur GNSS et une centrale inertielle pour obtenir des informations de localisation du lanceur.

Dans certains systèmes, pendant les périodes où le récepteur GNSS n'est plus fonctionnel, la centrale inertielle peut permettre de déterminer, la position du lanceur à partir de la dernière position connue du lanceur et à partir des données mesurées par les capteurs de la centrale inertielle. Un tel système nécessite cependant une centrale inertielle de très haute performance car sinon l'intégration des erreurs de mesure des capteurs inertiels sur une trop longue période temporelle (par exemple une dizaine de secondes) conduit à une erreur de localisation importante. Le temps nécessaire au récepteur GNSS pour faire une ré-acquisition d'un signal perdu est généralement nettement supérieur à la période de temps pendant laquelle la centrale inertielle est capable de fournir une localisation acceptable.

D'autres systèmes (comme par exemple ceux divulgués dans les demandes de brevet US 2007/118286 A1 et US 2005/0114023 A1) reposent sur une intégration forte entre la centrale inertielle et le récepteur GNSS et cherchent à utiliser les données de la centrale inertielle pour optimiser des boucles de suivi en fréquence et en code du récepteur GNSS afin de compenser en temps réel les variations de l'effet Doppler. On parle pour de tels systèmes de « couplage ultra-serré » (« ultra-tightly coupled integration » dans la littérature anglo-saxonne) entre la centrale inertielle et le récepteur GNSS. Dans le cas de variations importantes de l'effet Doppler, de tels systèmes ne sont cependant fonctionnels que si une centrale inertielle de très haute performance est utilisée et si des algorithmes de traitement du signal particulièrement complexes sont mis en œuvre dans les boucles de suivi du récepteur GNSS.

Il n'existe donc pas à l'heure actuelle de solution à bas coût, à faible poids, et facile à implémenter, susceptible de permettre de conserver des moyens de localisation d'un objet mobile soumis à une forte dynamique en rotation sur lui-même.

## EXPOSÉ DE L'INVENTION

La présente invention a pour objectif de remédier à tout ou partie des inconvénients de l'art antérieur, notamment ceux exposés ci-avant.

A cet effet, et selon un premier aspect, il est proposé par la présente invention un dispositif de localisation destiné à être embarqué sur un objet mobile susceptible de subir une dynamique de rotation sur lui-même. Le dispositif de localisation comporte :

- un récepteur d'un système de positionnement par satellites configuré pour fournir des données relatives à une position et une vitesse de l'objet mobile, ledit récepteur comprenant un module d'acquisition configuré pour effectuer une recherche en fréquence et en code d'un signal émis par un satellite et reçu par une antenne dudit récepteur,
- une centrale inertielle configurée pour fournir des données relatives à une accélération et une vitesse angulaire de l'objet mobile.

Le dispositif de localisation comporte un module de calcul, dit « module hybride de navigation », configuré pour :

- modéliser un mouvement de l'antenne du récepteur à partir :

o des données provenant du récepteur,

o des données provenant de la centrale inertielle, et

o de la distance entre l'antenne et un centre d'inertie de l'objet mobile,

- modéliser un mouvement du satellite à partir de paramètres orbitaux dudit satellite,
- estimer une valeur représentative de l'effet Doppler subi par le signal émis par le satellite en fonction du mouvement modélisé de l'antenne et du mouvement modélisé du satellite,
- communiquer ladite valeur représentative de l'effet Doppler au module d'acquisition, ledit module d'acquisition étant configuré pour effectuer la recherche en fréquence et en code du signal en fonction de ladite valeur représentative de l'effet Doppler estimée.

L'objet mobile peut par exemple être un lanceur, c'est-à-dire une fusée, destiné à lancer un engin spatial dans l'espace extra-atmosphérique. Dans certaines conditions, et notamment suite à un dysfonctionnement de la propulsion du lanceur, il peut en effet arriver que le lanceur se mette en rotation sur lui-même selon un axe transverse au lanceur et passant par un centre d'inertie du lanceur.

Lorsque l'objet mobile subit une dynamique de rotation sur lui-même, l'antenne du récepteur subit, par effet de bras de levier, une vitesse tangentielle d'autant plus grande que la distance entre l'antenne et le centre d'inertie de l'objet est importante. L'effet Doppler subi par le signal du satellite et reçu par l'antenne est d'autant plus important que la vitesse relative entre le satellite et l'antenne est importante. Le mouvement de rotation de l'objet mobile peut alors entraîner des interruptions de la visibilité du signal entre le satellite et l'antenne ainsi que des variations importantes de l'effet Doppler subi par le signal du satellite et reçu par l'antenne. Ceci peut avoir pour conséquence des pertes de signal par le récepteur qui peut alors ne plus être en mesure d'estimer une position. En estimant d'une part le déplacement de l'antenne (notamment grâce à la vitesse angulaire mesurée par la centrale inertielle et la connaissance de la distance séparant l'antenne du récepteur) et d'autre part le déplacement du satellite, il est possible d'estimer une valeur représentative de l'effet Doppler subi par le signal émis par le satellite et reçu par l'antenne. Ceci peut alors permettre de limiter le temps nécessaire au module d'acquisition du récepteur pour ré-acquérir le signal du satellite. Ceci a pour effet de réduire le temps pendant lequel le récepteur n'est pas en mesure d'estimer une position.

Dans des modes particuliers de réalisation, l'invention peut comporter en outre l'une ou plusieurs des caractéristiques suivantes, prises isolément ou selon toutes les combinaisons techniquement possibles.

Dans des modes particuliers de réalisation, la valeur représentative de l'effet Doppler estimée est un décalage fréquentiel entre le signal émis par le satellite et le signal reçu par l'antenne à un instant donné.

De telles dispositions permettent au module d'acquisition de tenter directement de détecter le signal émis par le satellite à une fréquence correspondant à la fréquence théorique d'émission du signal par le satellite à laquelle est appliqué le décalage fréquentiel estimé.

Dans des modes particuliers de réalisation, la valeur représentative de l'effet Doppler estimée est une valeur maximale de la variation d'un décalage fréquentiel entre le signal émis par le satellite et le signal reçu par l'antenne au cours du temps.

De telles dispositions permettent au module d'acquisition de limiter la largeur de la bande fréquentielle dans laquelle il convient de rechercher le signal émis par le satellite.

Dans des modes particuliers de réalisation, la valeur représentative de l'effet Doppler est estimée en outre à partir de données brutes du récepteur permettant d'estimer une erreur et une dérive d'une horloge du récepteur.

Selon un deuxième aspect, la présente invention concerne un lanceur, destiné à lancer un engin spatial dans l'espace extra-atmosphérique, qui embarque un dispositif de localisation selon l'un quelconques des modes de réalisation précédents.

Selon un troisième aspect, la présente invention concerne un procédé d'estimation de la position d'un objet mobile susceptible de subir une dynamique de rotation sur lui-même, l'objet mobile embarquant un dispositif de localisation comportant :

- un récepteur d'un système de positionnement par satellites configuré pour fournir des données relatives à une position et une vitesse de l'objet mobile, ledit récepteur comprenant un module d'acquisition configuré pour effectuer une recherche en fréquence et en code d'un signal émis par un satellite et reçu par une antenne dudit récepteur,
- une centrale inertielle configurée pour fournir des données relatives à une accélération et une vitesse angulaire de l'objet mobile,

Le procédé d'estimation de la position comporte :

- une modélisation, par un module de calcul du dispositif de localisation, dit « module hybride de navigation », d'un mouvement de l'antenne du récepteur à partir :

  o des données provenant du récepteur,
  o des données provenant de la centrale inertielle, et
  o de la distance entre l'antenne et un centre d'inertie de l'objet mobile,

- une modélisation, par le module hybride de navigation, d'un mouvement du satellite à partir de paramètres orbitaux dudit satellite,

- une estimation, par le module hybride de navigation, d'une valeur représentative de l'effet Doppler subi par le signal émis par le satellite en fonction du mouvement modélisé de l'antenne et du mouvement modélisé du satellite,
- une communication, par le module hybride de navigation, de ladite valeur représentative de l'effet Doppler au module d'acquisition,
- une recherche en fréquence et en code, par le module d'acquisition, du signal émis par le satellite, en fonction de la valeur représentative de l'effet Doppler estimée.

## PRÉSENTATION DES FIGURES

L'invention sera mieux comprise à la lecture de la description suivante, donnée à titre d'exemple nullement limitatif, et faite en se référant aux figures 1 à 5 qui représentent :

- Figure 1 : une représentation schématique d'un dispositif de localisation avec un « couplage relâché » entre un récepteur GNSS et une centrale inertielle,
- Figure 2 : une représentation schématique d'un dispositif de localisation avec un « couplage serré » entre un récepteur GNSS et une centrale inertielle,
- Figure 3 : une représentation schématique d'un dispositif de localisation avec un « couplage ultra serré » entre un récepteur GNSS et une centrale inertielle,
- Figure 4 : une représentation schématique d'un lanceur subissant un mouvement de rotation sur lui-même suite à un dysfonctionnement de propulsion,
- Figure 5 : une représentation schématique d'un dispositif de localisation selon l'invention,
- Figure 6 : une représentation schématique des principales étapes d'un procédé d'estimation de la position d'un objet susceptible de subir une forte dynamique de rotation sur lui-même.

Dans ces figures, des références identiques d'une figure à une autre désignent des éléments identiques ou analogues. Pour des raisons de clarté, les éléments représentés ne sont pas nécessairement à une même échelle, sauf mention contraire.

## DESCRIPTION DÉTAILLÉE DE MODES DE RÉALISATION

Un système de positionnement par satellites (GNSS, de l'anglais « Global Navigation Satellite System ») permet de déterminer la position et la vitesse de déplacement d'un objet.

Un tel système s'articule autour de trois segments : un segment spatial, un segment de contrôle et un segment utilisateur.

Le segment spatial comprend une constellation de satellites artificiels répartis sur plusieurs orbites. Les orbites des satellites sont choisies de sorte qu'en tout point du globe terrestre, quatre satellites au moins sont visibles à un instant donné.

A titre d'exemple, le système GPS (acronyme anglais de « Global Positioning System ») comprend 31 satellites répartis sur six orbites quasicirculaires de 20 200 kilomètres d'altitude moyenne. La période de révolution d'un satellite est de 11 heures 58 minutes et 2 secondes, ce qui correspond à deux révolutions complètes par jour à la vitesse de 14 000 km/h environ. Chaque orbite est inclinée à environ 55 degrés par rapport au plan équatorial et comporte 5 ou 6 satellites.

D'autres systèmes GNSS existent, comme par exemple le système GLONASS (acronyme anglais de « Global Navigation Satellite System »), ou le système GALILEO qui est actuellement en cours de déploiement. Chaque système a des caractéristiques propres en termes de nombre de satellites, d'altitude des satellites, de nombre de plans orbitaux, d'inclinaison ou de période orbitale, etc.

Le segment de contrôle comprend généralement plusieurs stations terrestres dont le rôle est de surveiller et corriger certains paramètres des satellites.

Le segment utilisateur comprend l'ensemble des récepteurs susceptibles de décoder les signaux transmis par les satellites pour calculer des données de position, de vitesse ou de temps. Il est ainsi possible de déterminer, à l'aide d'un système GNSS, la position ou la vitesse d'un objet qui embarque un récepteur GNSS.

Une position déterminée par un récepteur GNSS comprend généralement des coordonnées géographiques de longitude, latitude et altitude par rapport au niveau de la mer, dans un référentiel terrestre. La position est déterminée par une méthode de trilatération. A cette fin, le récepteur calcule, à partir des signaux qu'il reçoit en provenance des satellites, les distances qui le séparent des satellites. Comme les satellites émettent aussi régulièrement des informations sur leur position, le récepteur est capable de déterminer sa propre position à partir de la connaissance d'une part des distances qui séparent le récepteur des satellites et d'autre part de la position des satellites. La détermination de la position du récepteur est basée sur l'intersection d'au moins trois sphères dans l'espace, chaque sphère étant définie par son centre correspondant à la position d'un satellite, et par son rayon correspondant à la distance calculée entre le récepteur et le satellite. En général, quatre satellites sont nécessaires pour déterminer avec précision la position en trois dimensions d'un récepteur.

Chaque satellite émet une onde électromagnétique sur une ou plusieurs fréquences porteuses différentes. Par exemple pour le système GPS, chaque satellite émet simultanément sur deux fréquences porteuses : l'une à 1575,42 MHz nommée L1, et l'autre à 1227,60 MHz nommée L2. Ces porteuses sinusoïdales sont modulées par un code selon le principe CDMA (acronyme anglais de « Code Division Multiple Access »). Il s'agit d'un code binaire pseudo-aléatoire (code PRN pour « Pseudo Random Noise » en anglais) qui est unique pour chaque satellite de la constellation du système GNSS considéré. Pour le GPS, il existe en fait deux codes de modulation : un code C/A (acronyme anglais de « Coarse Acquisition ») présentant un débit de 1,023 Mbits/s (il s'agit d'un code de 1023 impulsions binaires, ou « chips » dans la littérature anglo-saxonne, avec une période de 1 ms) et permettant une détermination « grossière » du temps d'arrivée du signal, et un code P (pour le terme anglais « Precise ») présentant un débit dix fois plus grand (10,23 Mbits/s) et donc une détermination plus précise du temps d'arrivée d'un signal, mais qui est n'est pas accessible pour des utilisations civiles. Ces codes sont eux-mêmes modulés par un message de navigation émis par le satellite.

Pour être capable de décoder un message émis par un satellite, et pour pouvoir calculer la distance le séparant dudit satellite, un récepteur GNSS doit faire une recherche à la fois en fréquence et en code.

La recherche en code est nécessaire pour pouvoir démoduler le signal reçu du satellite. A cette fin, le récepteur GNSS génère via un oscillateur local une réplique du code de chaque satellite et réalise des corrélations de cette réplique avec le signal reçu en décalant successivement la réplique du code d'une impulsion jusqu'à faire correspondre le train d'impulsions du signal reçu avec le train d'impulsions du code répliqué. Lorsque la corrélation présente un niveau d'énergie supérieur à un seuil prédéterminé, cela signifie que le train d'impulsions du signal reçu est synchronisé avec le train d'impulsions du signal répliqué au niveau du récepteur, et il est alors possible d'une part de décoder un message de navigation émis par le satellite, et d'autre part de déterminer les instants d'émission et de réception du signal par rapport à l'horloge locale du satellite qui est synchronisée avec celle du système. Cela permet alors de déterminer le temps mis par le signal pour parcourir le trajet entre le satellite et le récepteur, et d'en déduire la distance qui sépare le satellite du récepteur.

La recherche en fréquence est nécessaire car les satellites se déplacent à une vitesse importante par rapport au récepteur, ce qui entraîne par effet Doppler un décalage important entre la fréquence à laquelle un signal est émis par un satellite et la fréquence à laquelle ce signal est reçu par le récepteur.

Il est connu que l'effet Doppler se traduit mathématiquement par la formule :

$$ f_{rec} = \frac{1 - \dfrac{v_{rec}}{c}}{1 - \dfrac{v_{em}}{c}} \times f_{em} $$

où :

- $f_{em}$ est la fréquence à laquelle le signal est émis par le satellite,
- $f_{rec}$ est la fréquence à laquelle le récepteur reçoit le signal,
- $c$ est la vitesse de la lumière (environ 300 000 km/s),
- $v_{rec}$ est la vitesse de déplacement du récepteur selon la direction de propagation du signal,
- $v_{em}$ est la vitesse de déplacement du satellite selon la direction de propagation du signal.

Ainsi, même si la vitesse de déplacement du récepteur est négligeable, la vitesse élevée de déplacement du satellite projetée sur la direction de propagation du signal peut entraîner un décalage fréquentiel important, par exemple de l'ordre de 5 kHz pour une vitesse $v_{em}$ de l'ordre de 1 km/s et pour une fréquence d'émission $f_{em}$ de 1575,42 MHz.

Si le récepteur ne connaît pas a priori le décalage fréquentiel dû à l'effet Doppler à appliquer pour recevoir un signal émis par un satellite, il doit rechercher sur une bande fréquentielle large englobant toutes les fréquences envisageables auxquelles le récepteur pourrait recevoir ledit signal. Par exemple, pour détecter en fréquence et en code un signal émis par un satellite, la fréquence de l'oscillateur local du récepteur utilisé pour générer une réplique du signal du satellite est tout d'abord initialisée à la fréquence théorique d'émission par le satellite, puis elle est ensuite modifiée régulièrement par un pas fréquentiel d'une valeur prédéterminée, par exemple 200 Hz, de part et d'autre de la fréquence initiale, jusqu'à ce qu'une corrélation entre le signal reçu et le signal répliqué présente un niveau d'énergie supérieur à un certain seuil, autrement dit jusqu'à ce que le signal soit détecté en code et en fréquence.

Cette étape de recherche en fréquence et en code d'un signal émis par un satellite peut être particulièrement coûteuse en temps et en ressources de calcul, notamment si le récepteur n'a aucune information sur le décalage fréquentiel dû à l'effet Doppler qu'il doit appliquer pour recevoir ledit signal. En effet, si par exemple la recherche est faite par pas fréquentiel de 200 Hz dans une bande de fréquence s'étendant de 10 kHz de part et d'autre de la fréquence théorique d'émission, avec un code d'une longueur de 1023 impulsions, alors il y 102 300 combinaisons possibles pour un corrélateur du récepteur.

Plus le pas fréquentiel utilisé est petit, et plus l'énergie d'un pic de corrélation est grande (et donc la détection du signal est optimisée), mais plus cela augmente le nombre de possibilités à considérer et donc le temps d'acquisition du signal.

Un message de navigation reçu d'un satellite contient des données « almanach » et des données « éphémérides ».

Les données almanach fournissent toutes les informations nécessaires pour permettre à l'utilisateur de calculer l'emplacement approximatif de chaque satellite dans la constellation à un instant donné. Les données d'almanach ne sont généralement pas suffisantes pour déterminer avec précision la position du récepteur, mais elles peuvent être utilisées pour déterminer quels satellites sont visibles à un endroit donné afin que le récepteur puisse rechercher ces satellites en priorité lorsqu'il est activé. Les données almanach peuvent être stockées dans une mémoire du récepteur où elles restent valables pendant plusieurs mois.

Les données éphémérides sont semblables aux données d'almanach mais elles permettent une détermination beaucoup plus précise de la position du satellite nécessaire pour estimer in fine la position du récepteur. Contrairement aux données d'almanach, les données éphémérides d'un satellite ne sont diffusées que par ce satellite. Elles sont actualisées périodiquement (par exemple toutes les 4 à 6 heures pour le système GPS) afin de tenir compte des changements affectant l'orbite du satellite. Les données éphémérides peuvent également être stockées dans une mémoire du récepteur pour être utilisées quand nécessaire.

Les informations contenues dans un message de navigation contiennent également de nombreux paramètres de correction pour limiter les différentes sources d'erreur du système comme par exemple la dérive des horloges des satellites, l'impact des différentes couches de l'atmosphère (ionosphère, troposphère) sur la propagation du signal, les erreurs orbitales, etc.

Lorsqu'un récepteur GNSS n'a aucune donnée de navigation en mémoire (pas d'almanach, pas de données sur les orbites des satellites, pas de position initiale), il doit procéder à un « démarrage à froid ». C'est par exemple le cas lors de la première mise en service du récepteur, ou après une longue période pendant lequel le récepteur n'a pas été mis en service. Le récepteur choisit alors arbitrairement un ensemble de satellites et cherche à détecter en fréquence et en code un signal pour chacun de ces satellites. Si aucun des satellites n'est acquis après une période prédéterminée, le récepteur choisit un nouvel ensemble de recherche de satellites et il répète le processus jusqu'à ce qu'au moins un signal soit détecté. Lorsque c'est le cas, le récepteur rassemble les données de l'almanach transmises dans un ou plusieurs messages de navigation transporté par le signal. Ces données peuvent lui permettre d'éliminer du processus de recherche certains satellites qui sont au-dessous de l'horizon afin d'accélérer la détection des satellites additionnels nécessaires au calcul d'une position du récepteur. Dès que les signaux de quatre satellites sont détectés, le récepteur peut calculer une première position. Un démarrage à froid peut durer jusqu'à deux minutes dans les cas les plus défavorables.

Si au contraire, lors de sa mise en service le récepteur GNSS possède des informations sur sa position approximative et/ou sur les positions des satellites (par exemple s'il a en mémoire un almanach, des éphémérides et la dernière position calculée sauvegardés lors de sa dernière mise en service), alors le récepteur peut procéder à un « démarrage à chaud ». A partir des paramètres orbitaux des différents satellites, le récepteur GNSS peut estimer les positions approximatives des satellites qui sont au-dessus de l'horizon, ainsi que les vitesses auxquelles ils se déplacent selon une direction de propagation du signal du satellite vers le récepteur. Le récepteur peut alors estimer pour chaque satellite un décalage fréquentiel dû à l'effet Doppler qu'il convient d'appliquer pour détecter un signal dudit satellite. La fréquence de l'oscillateur local du récepteur utilisé pour générer une réplique du signal du satellite peut alors être initialisée à la fréquence estimée à laquelle le récepteur s'attend à recevoir le signal du satellite, plutôt qu'à la fréquence d'émission théorique du satellite. La recherche en fréquence et en code du signal est alors grandement accélérée si l'estimation de l'effet Doppler est correcte.

Une fois que le signal d'un satellite est détecté, des boucles de suivi en code et en fréquence (« code tracking loop » et « carrier tracking loop » dans la littérature anglo-saxonne) sont mises en œuvre pour affiner puis maintenir la synchronisation entre la réplique du signal généré par le récepteur et le signal émis par le satellite aussi précisément que possible. En effet, les vitesses relatives entre le satellite et le récepteur varient au cours du temps, ce qui provoque une variation au cours du temps du décalage fréquentiel dû à l'effet Doppler. Il faut donc corriger continuellement la fréquence de l'oscillateur local du récepteur pour qu'elle soit ajustée aussi précisément que possible sur la fréquence à laquelle le signal émis par le satellite est réellement reçu par le récepteur à un instant donné. De manière conventionnelle, la boucle de suivi en fréquence utilise une boucle à verrouillage de phase (PLL, acronyme anglais de « Phase-Locked Loop ») et/ou une boucle à verrouillage de fréquence (FLL, acronyme anglais de « Frequency-Locked Loop »).

Les variations au cours du temps du décalage fréquentiel dû à l'effet Doppler observées par les boucles de suivi peuvent également permettre de déterminer la vitesse de déplacement de l'objet mobile qui embarque le récepteur GNSS.

Quand un signal d'un satellite donné est momentanément perdu par les boucles de suivi, par exemple à cause d'interférences, ou bien suite à la perte de visibilité du satellite (obstacle empêchant une propagation correcte du signal entre le satellite et le récepteur), le récepteur tente une ré-acquisition du signal par une nouvelle recherche en fréquence et en code. Le récepteur peut alors utiliser les dernières informations connues afin de déterminer l'effet Doppler subi par le signal et estimer la fréquence centrale et la gamme de fréquences auxquelles la recherche doit se faire. En cas d'échec, la largeur de la plage de recherche est élargie.

Pour améliorer la précision de localisation, ou pour compenser les périodes plus ou moins longues pendant lesquelles les signaux des satellites ne sont plus détectés par un récepteur GNSS, une solution possible consiste à utiliser une centrale inertielle (INS pour « Inertial Navigation System », ou IMU pour « Inertial Measurement Unit » en anglais).

Une centrale inertielle est capable d'intégrer les mouvements d'un mobile (accélération et vitesse angulaire) pour estimer son orientation, sa vitesse et sa position relativement à une position de départ connue. Typiquement, une centrale inertielle comporte trois accéléromètres et trois gyroscopes. Les gyroscopes permettent de mesurer les trois composantes d'une vitesse angulaire tandis que les accéléromètres permettent de mesurer les trois composantes d'une accélération. Par une intégration des mesures en fonction du temps en partant d'une position et une vitesse initiales connues, il est possible de déterminer l'orientation, la vitesse et la position d'un objet mobile qui embarque une centrale inertielle.

Une centrale inertielle présente pour avantage principal d'être un système autonome qui n'utilise aucune information provenant de sources externes. Une centrale inertielle peut notamment être utilisée en complément d'un récepteur GNSS pour déterminer la position d'un objet à partir de la dernière position de cet objet déterminée par le récepteur GNSS avant que ce dernier ne perde la visibilité des signaux des satellites du système GNSS.

Toutefois, une centrale inertielle souffre des erreurs de ses capteurs (gyroscopes, accéléromètres) qui affectent les mesures des rotations et des accélérations et qui engendrent des dérives au cours du temps des estimations de l'attitude, de la vitesse et de la position de l'objet.

Différentes solutions sont envisageables pour combiner les informations obtenues par un récepteur GNSS et par une centrale inertielle embarqués dans un objet mobile pour déterminer la position et/ou la vitesse de cet objet. Ces différentes solutions présentent un couplage plus ou moins fort entre le récepteur GNSS et la centrale inertielle.

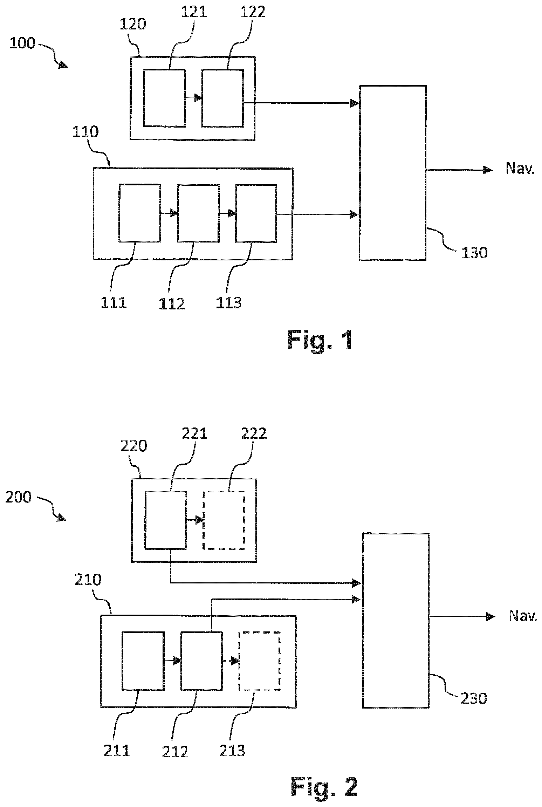

La figure 1 représente schématiquement un dispositif 100 de localisation comportant un récepteur 110 GNSS et une centrale inertielle 120. Le récepteur 110 GNSS comporte, de manière conventionnelle, des moyens de traitement du signal comme par exemple des oscillateurs locaux, des amplificateurs, des filtres analogiques et/ou numériques, des convertisseurs analogique/numérique, un ou plusieurs micro-processeurs, etc., pour réaliser les opérations de détection et de synchronisation en fréquence et en code des signaux émis par les satellites d'un système GNSS, pour démoduler ces signaux, décoder des messages de navigation qu'ils transportent, calculer les distances qui séparent le récepteur 110 des satellites, etc. Notamment, le récepteur 110 comporte un module d'acquisition 111 dédié à la recherche initiale en fréquence et en code d'un signal d'un satellite. Le récepteur 110 comporte également un module de suivi 112 dédié au maintien de la synchronisation d'un signal détecté par le module d'acquisition 111. Comme cela a été expliqué précédemment, le module de suivi 112 comporte des boucles de suivi en fréquence et en code. Le module de suivi 112 comporte notamment une boucle PLL pour ajuster la fréquence d'un oscillateur local du récepteur 110 afin de maintenir le plus précisément possible au cours du temps la synchronisation entre un signal répliqué généré par le récepteur 110 et le signal du satellite reçu par le récepteur 110. Le récepteur 110 comporte également un filtre estimatif 113, utilisant par exemple un algorithme des moindres carrés, qui permet d'estimer les distances séparant le récepteur 110 des satellites en limitant les erreurs dues à un bruit dans les mesures. Le récepteur 110 fournit alors en sortie les informations sur la position et sur la vitesse qu'il a estimées.

La centrale inertielle 120 comporte un module de mesure 121 adapté pour fournir des accélérations linéaires et des vitesses angulaires mesurées respectivement par des accéléromètres et des gyroscopes de la centrale inertielle 120, ainsi qu'un module d'estimation 122 adapté pour fournir des informations de position et de vitesse estimées à partir des accélérations et des vitesses angulaires mesurées.

Les informations fournies par la centrale inertielle 120 sont alors combinées aux informations fournies par le récepteur 110 GNSS dans un estimateur 130, comprenant conventionnellement un filtre de Kalman, pour fournir des données finales de navigation concernant la position et la vitesse d'un objet embarquant un dispositif 100 de localisation.

Un dispositif 100 tel que représenté à la figure 1, est dit à « couplage relâché » (« loosely coupled integration » en anglais) entre le récepteur 110 GNSS et la centrale inertielle 120. Un avantage d'un tel dispositif 100 est la simplicité puisqu'il peut être implémenté à partir d'un récepteur 110 GNSS et d'une centrale inertielle 120 conventionnels sans modifications matérielles ou logicielles de l'un ou l'autre de ces dispositifs. Un autre avantage est la redondance des informations sur la position et la vitesse puisque ces informations sont fournies à la fois, et de manière indépendante, par le récepteur 110 et la centrale inertielle 120.

La figure 2 représente schématiquement un dispositif 200 de localisation pour lequel on parle de « couplage serré » (« tightly coupled integration » en anglais) entre un récepteur 210 GNSS et une centrale inertielle 220. Dans un tel dispositif 200, les données en entrée de l'estimateur 230 sont réduites aux données brutes obtenues par les différents capteurs : d'une part les distances calculées par le module de suivi 212 du récepteur 210 GNSS, d'autre part les accélérations et les vitesses angulaires mesurées par le module de mesure 221 de la centrale inertielle 220. Dans ce cas, le filtre estimatif 213 du récepteur 210 et le module d'estimation 222 de la centrale inertielle 220 sont « court circuités » (il ne sont pas utilisés).

L'estimateur 230 joue alors un rôle prépondérant dans un tel dispositif 200 pour fournir les données finales de navigation à partir des données brutes des différents capteurs.

Un dispositif 200 avec couplage serré présente de meilleures performances de localisation qu'un dispositif 100 avec couplage relâché. Néanmoins, un tel dispositif 200 avec couplage serré présente une complexité plus importante au niveau de l'estimateur 230.

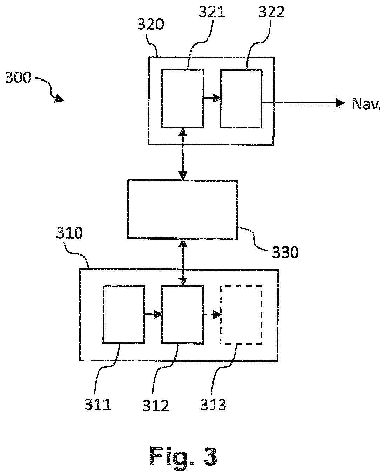

La figure 3 représente schématiquement un dispositif 300 de localisation pour lequel on parle de « couplage ultra-serré » (« ultra-tightly coupled integration » en anglais) entre un récepteur 310 GNSS et une centrale inertielle 320. Un tel dispositif 300 repose sur une intégration très forte entre la centrale inertielle 320 et le module de suivi 312 du récepteur 310 GNSS, par l'intermédiaire d'un filtre estimatif 330 de type filtre de Kalman. Les accélérations et les vitesses angulaires mesurées par le module de mesure 321 de la centrale inertielle 320 peuvent alors être utilisées pour corriger les boucles de suivi du module de suivi 312 du récepteur 310. Cela peut notamment permettre au module de suivi 312 de maintenir une synchronisation avec le signal émis par un satellite même dans des cas où la dynamique de l'objet qui embarque le dispositif 300 est importante. En effet, plus la dynamique de l'objet est importante, plus la variation au cours du temps du décalage fréquentiel dû à l'effet Doppler est importante, et plus le suivi du signal du satellite est délicat. A partir des mesures fournies par la centrale inertielle 320, les boucles de suivi du module de suivi 312 peuvent calculer et compenser en temps réel des variations du décalage Doppler résultant de la dynamique de l'objet.

Une autre particularité de ce dispositif 300 est que les différentes boucles de suivi du module de suivi 312 gérant les signaux de différents satellites ne sont plus indépendantes les unes des autres. Les données de la centrale inertielle 320 et les données des boucles de suivi du module de suivi 312 sont combinées par le filtre estimatif 330 pour ajuster au mieux le suivi de l'ensemble des signaux reçus des différents satellites.

Le fait de réduire la quantité de données indépendantes à suivre pour les mêmes données en entrée permet d'améliorer le rapport signal sur bruit et donc les performances des boucles de suivi même dans le cas d'une dynamique importante de l'objet qui embarque le dispositif 300 de localisation.

En contrepartie, un tel dispositif 300 implique une complexité très importante avec des modifications logicielles et/ou matérielles substantielles dans le récepteur 310 et la centrale inertielle 320. En outre, une puissance de calcul importante est nécessaire, et la centrale inertielle doit être particulièrement performante pour limiter au maximum les erreurs de mesure de ses capteurs.

Dans la suite de la description, on se place à titre d'exemple dans le cas où l'on cherche à connaître la localisation d'un lanceur, c'est-à-dire une fusée destinée à placer un objet dans l'espace extra-atmosphérique.

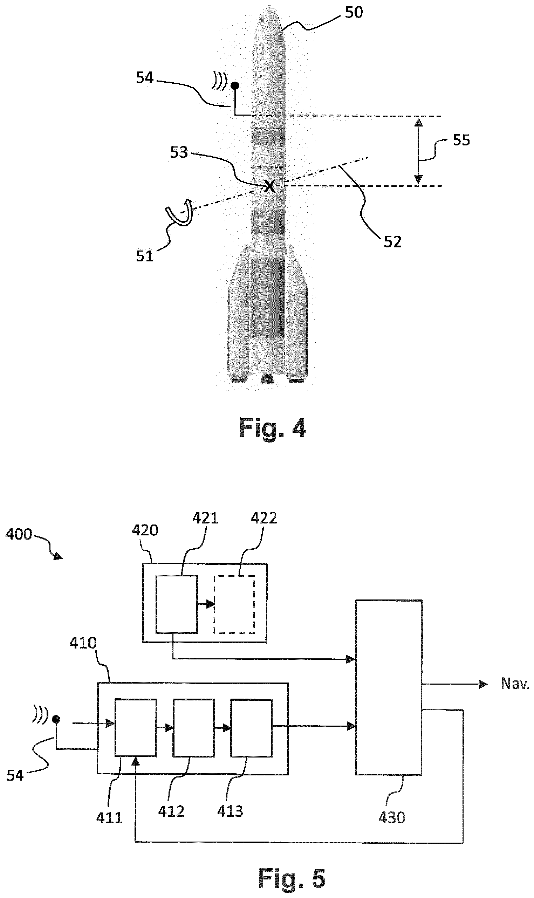

La figure 4 représente schématiquement un tel lanceur 50. Un dysfonctionnement de la propulsion du lanceur 50 peut entraîner un mouvement 51 du lanceur en rotation autour d'un axe 52 transversal passant par un centre d'inertie 53 du lanceur 50. Une baie avionique d'un tel lanceur 50 est généralement située à plusieurs mètres au-dessus du centre d'inertie 53. Si cette baie comporte un dispositif de localisation comportant un récepteur GNSS, une antenne 54 de ce récepteur subira alors une forte dynamique en rotation sous l'effet du bras de levier 55 séparant le centre d'inertie 53 de l'antenne 54.

Cette dynamique importante de l'antenne 54 du récepteur GNSS entraîne une variation importante au cours du temps du décalage fréquentiel dû à l'effet Doppler.

Le décalage fréquentiel $\Delta f$ dû à l'effet Doppler observé au niveau de l'antenne 54 pour un signal émis par un satellite peut en effet être formulé comme suit :

$$\Delta f = \left( \frac{1 - \frac{v_{rec}}{c}}{1 - \frac{v_{em}}{c}} - 1 \right) \cdot f_{em}$$

où :

- $f_{em}$ est la fréquence à laquelle le signal est émis par le satellite,
- $c$ est la vitesse de la lumière (environ 300 000 km/s),
- $v_{rec}$ est la vitesse de déplacement de l'antenne 54 selon la direction de propagation du signal entre le satellite et l'antenne 54,
- $v_{em}$ est la vitesse de déplacement du satellite selon la direction de propagation du signal.

Aussi la variation $\Delta\Delta f$ du décalage fréquentiel dû à l'effet Doppler en fonction de la variation $\Delta v_{rec}$ de la vitesse de l'antenne 54 selon la direction de propagation du signal entre le satellite et l'antenne 54 peut être formulée comme suit :

$$\Delta\Delta f = \frac{f_{em}}{\left(1 - \frac{v_{em}}{c}\right) \cdot c} \cdot \Delta v_{rec}$$

Considérons par exemple que le mouvement 51 du lanceur 50 suite à un dysfonctionnement de la propulsion est tel qu'il fait une rotation complète par seconde autour de l'axe 52 transversal. Supposons que le bras de levier 55 formé entre le centre d'inertie 53 et l'antenne 54 est de vingt mètres. Alors la vitesse tangentielle de l'antenne 54 du récepteur GNSS par rapport au centre d'inertie 53 est d'environ 126 m/s ( $2 \cdot \pi \times 20 \approx 126$ ). Si on suppose en outre que la fréquence d'émission $f_{em}$ est de 1,575 MHz, que la vitesse de la lumière $c$ est proche de 300 000 km/s, et que la vitesse $v_{em}$ du satellite selon la direction de propagation du signal entre le satellite et l'antenne 54 est d'environ 1 km/s, alors il apparaît que la

variation $\Delta\Delta f$ du décalage fréquentiel dû à l'effet Doppler engendré par le mouvement 51 de rotation de l'antenne 54 autour du centre d'inertie 53 peut atteindre 1323 Hz en une demi seconde (la vitesse de l'antenne 54 selon la direction de propagation du signal varie en effet de 2 × 126 = 252 m/s lors d'une demi rotation de l'antenne 54 autour du centre d'inertie 53).

Avec une telle variation de l'effet Doppler due à la dynamique importante de l'antenne 54, un récepteur GNSS conventionnel n'est pas capable de maintenir la synchronisation avec un signal d'un satellite. En outre, le mouvement 51 de rotation peut provoquer des interruptions de la visibilité d'un signal d'un satellite par l'antenne 54. La perte du signal entraîne alors le besoin de procéder à une nouvelle acquisition du signal, ce qui peut prendre plusieurs dizaines de secondes dans la mesure où la bande de fréquence dans laquelle la recherche doit être effectuée est large. Il n'est alors plus possible d'avoir des informations sur la position du lanceur 50 pendant le temps de ré-acquisition du signal (ou de plusieurs signaux de plusieurs satellites). Or il est particulièrement important dans l'exemple considéré de conserver des moyens de localisation du lanceur 50 afin de récolter un maximum d'informations avant d'exécuter l'ordre d'autodestruction du lanceur 50. L'ordre d'autodestruction du lanceur 50 doit être pris en fonction de la trajectoire du lanceur 50 pour éviter par exemple qu'il ne vienne s'écraser à la surface de la Terre sur une région habitée. Pour suivre la trajectoire du lanceur 50, il faut pouvoir obtenir régulièrement des positions du lanceur 50.

Avec un dispositif 100 de localisation tel que celui présenté en référence à la figure 1, les données de la centrale inertielle 120 peut permettre d'estimer une position du lanceur 50 pendant une période de temps où le récepteur 110 GNSS est en cours d'acquisition des signaux nécessaires à la détermination de la position du lanceur 50. Cependant, pour une centrale inertielle à bas coût et de faible poids de type MEMS (acronyme anglais de « micro-machined electromechanical system »), cela n'est possible que pendant une courte période de l'ordre de quelques secondes. Après une période plus longue, l'intégration des erreurs de mesures des capteurs de la centrale inertielle conduit à des erreurs de localisation trop importantes.

Le dispositif 200 de localisation tel que celui présenté en référence à la figure 2 présente les mêmes inconvénients. La correction éventuelle des boucles de suivi du module de suivi 212 du récepteur 210 GNSS à partir des données de la centrale inertielle 220 ne permettent pas de compenser une variation de l'effet Doppler aussi importante que celle observée dans l'exemple considéré à cause du mouvement 51 de rotation sur lui-même du lanceur 50.

Le dispositif 300 de localisation tel que celui présenté en référence à la figure 3 ne saurait compenser en temps réel la variation de l'effet Doppler que si les capteurs de la centrale inertielle 320, les boucles de suivi du récepteur 310 GNSS, et les moyens de calcul du dispositif présentent des performances exceptionnelles. Le coût et la complexité d'un tel dispositif deviennent alors prohibitifs pour l'application considérée.

Pour ces différents dispositifs de localisation décrits en référence aux figures 1 à 3, une fois qu'un signal d'un satellite a été perdu à cause du mouvement 51 de rotation (perte de visibilité du signal ou perte de synchronisation à cause de l'effet Doppler), il faut une période de temps particulièrement longue, pouvant aller jusqu'à plusieurs dizaines de secondes, pour réacquérir le signal.

L'invention consiste alors à utiliser la connaissance de la position de l'antenne 54 par rapport au centre d'inertie 53 du lanceur 50 pour estimer l'effet Doppler à un instant donné et/ou la variation maximale de l'effet Doppler au cours du temps générés par le mouvement du satellite et le mouvement de l'antenne 54 l'un par rapport à l'autre, afin d'accélérer la ré-acquisition du signal.

La détermination de l'effet Doppler à un instant donné ou de la variation maximale de l'effet Doppler au cours du temps permet en effet d'accélérer la recherche en fréquence et en code d'un signal émis par un satellite.

En effet, si le décalage fréquentiel entre le signal émis par le satellite et le signal reçu par l'antenne 54 à un instant donné est connu, alors il est possible de déterminer à quelle fréquence l'antenne 54 reçoit ledit signal, et il peut suffire de faire des corrélations à cette fréquence particulière pour détecter le signal.

Plus généralement, si une valeur maximale de la variation du décalage fréquentiel entre le signal émis par le satellite et le signal reçu par l'antenne 54 est connue, alors il est possible de limiter la largeur de la bande de fréquence dans laquelle effectuer les corrélations.

La figure 5 représente schématiquement un dispositif 400 de localisation selon l'invention pouvant être embarqué dans un lanceur 50 tel que celui décrit en référence à la figure 4.

Le dispositif 400 de localisation comporte un récepteur 410 GNSS et une centrale inertielle 420.

Le récepteur 410 GNSS comporte, de manière conventionnelle, des moyens de traitement du signal comme par exemple des oscillateurs locaux, des amplificateurs, des filtres analogiques et/ ou numériques, des convertisseurs analogique/numérique, un ou plusieurs micro-processeurs, etc., pour réaliser les opérations de détection et de synchronisation en fréquence et en code des signaux émis par les satellites d'un système GNSS, pour démoduler ces signaux, décoder des messages de navigation qu'ils transportent, calculer les distances qui séparent le récepteur 410 des satellites, etc. Notamment, le récepteur 410 comporte un module d'acquisition 411 dédié à la recherche initiale en fréquence et en code d'un signal d'un satellite. Un tel signal est reçu par une antenne 54 du récepteur 410. Le récepteur 410 comporte également un module de suivi 412 dédié au maintien de la synchronisation d'un signal détecté par le module d'acquisition 411. Comme cela a été expliqué précédemment, le module de suivi 412 comporte des boucles de suivi en fréquence et en code. Le récepteur 410 comporte également un filtre estimatif 413, utilisant par exemple un algorithme des moindres carrés, qui permet d'estimer les distances séparant le récepteur 410 des satellites en limitant les erreurs dues à un bruit dans les mesures. Le récepteur 410 fournit alors en sortie les informations sur la position et sur la vitesse qu'il a estimées.

La centrale inertielle 420 comporte un module de mesure 421 adapté pour fournir des accélérations linéaires et des vitesses angulaires, selon trois directions de l'espace, mesurées respectivement par des accéléromètres et des gyroscopes de la centrale inertielle 420, ainsi qu'un module d'estimation 422 adapté pour fournir des informations de position et de vitesse estimées à partir des accélérations et des vitesses angulaires mesurées.

Le dispositif 400 de localisation comporte également un module de calcul, dit « module hybride 430 de navigation ». Le module hybride 430 de navigation comporte par exemple des moyens de calcul et un filtre estimatif de type filtre de Kalman.

Tel qu'illustré sur la figure 5, le module hybride 430 de navigation prend en entrée des données provenant de la centrale inertielle 420 et des données provenant du récepteur 410 GNSS.

Les données provenant de la centrale inertielle 420 comportent par exemple des données relatives aux composantes dans un espace tridimensionnel de la vitesse angulaire, et de l'accélération mesurées par le module de mesure 421 à l'aide des capteurs (accéléromètres et gyroscopes) de la centrale inertielle 420.

Les données provenant du récepteur 410 comportent par exemple des données d'almanach et/ou d'éphémérides contenant des paramètres orbitaux des satellites du système GNSS ainsi que la position et la vitesse déterminées par le récepteur 410. Ces données peuvent également contenir des données brutes (distances calculées séparant le récepteur 410 des différents satellites, estimation de l'effet Doppler réalisée par le récepteur 410, etc.) qui peuvent permettre d'estimer l'erreur et la dérive de l'horloge interne du récepteur 410.

Les données d'almanach et/ou d'éphémérides des satellites du système GNSS peuvent également être chargées dans une mémoire du module hybride 430 de navigation par des moyens tiers.

Le module hybride 430 de navigation est configuré pour modéliser un mouvement d'une antenne 54 du récepteur 410 à partir :

- des données provenant du récepteur 410 (position et vitesse estimées par le récepteur 410),
- des données provenant de la centrale inertielle 420 (vitesse angulaire, et accélération mesurées par la centrale inertielle 420), et
- de la distance séparant l'antenne 54 du centre d'inertie 53 du lanceur 50.

Il convient de noter que la position du centre d'inertie 53 d'un lanceur 50 varie au cours du temps avec la séparation des différents étages du lanceur 50, la consommation du carburant embarqué dans le lanceur 50, etc. Différents paramètres permettant d'estimer la position du centre d'inertie 53 du lanceur 50 au cours du temps peuvent être pris en compte par le module hybride 430 de navigation pour déterminer la distance (bras de levier) séparant l'antenne 54 du centre d'inertie 53 du lanceur 50. Ces paramètres sont par exemple chargés dans une mémoire du module hybride 430 de navigation par des moyens tiers avant la mise à feu du lanceur.

Le module hybride 430 de navigation est également configuré pour modéliser un mouvement d'un satellite à partir de paramètres orbitaux dudit satellite extraits des données d'almanach et/ou d'éphémérides.

Le mouvement de l'antenne 54 et le mouvement d'un satellite sont par exemple modélisés par rapport à un référentiel terrestre commun.

Le module hybride 430 de navigation est configuré pour estimer une valeur représentative de l'effet Doppler appliqué au signal émis par un satellite et observé au niveau de l'antenne 54. Cet effet Doppler résulte du mouvement de l'antenne 54 et du mouvement du satellite l'un par rapport à l'autre. Cette valeur représentative de l'effet Doppler appliqué au signal émis par le satellite et observé au niveau de l'antenne 54 peut par exemple correspondre à un décalage fréquentiel entre le signal émis par le satellite et le signal reçu par l'antenne 54 à un instant donné, ou bien à une valeur maximale de la variation du décalage fréquentiel entre le signal émis par le satellite et le signal reçu par l'antenne 54 au cours du temps. La valeur représentative de l'effet Doppler appliqué au signal émis par le satellite et observé au niveau de l'antenne 54 est estimée en fonction du mouvement modélisé de l'antenne 54 et du mouvement modélisé du satellite. La connaissance du mouvement de l'antenne 54 et du mouvement du satellite permet en effet de déterminer $v_{rec}$, $v_{em}$ et $\Delta v_{rec}$ pour en déduire $\Delta f$ et $\Delta\Delta f$ tels que définis dans les formules susmentionnées.

Dans des modes particuliers de réalisation, le module hybride 430 de navigation utilise en outre une erreur et une dérive de l'horloge interne du récepteur 410 pour estimer ladite valeur représentative de l'effet Doppler.

Le module hybride 430 de navigation est configuré pour communiquer ladite valeur représentative de l'effet Doppler au module d'acquisition 411 du récepteur 410 afin d'accélérer une ré-acquisition du signal du satellite en cas de perte du signal.

La détermination de l'effet Doppler ou la variation de l'effet Doppler permet en effet d'accélérer la recherche en fréquence et en code d'un signal émis par un satellite.

Si une valeur maximale de la variation du décalage fréquentiel entre le signal émis par le satellite et le signal reçu par l'antenne 54 est connue, alors il est possible de limiter la largeur de la bande de fréquence dans laquelle effectuer les corrélations. La détection du signal est alors plus rapide.

Dans l'exemple considéré et décrit en référence à la figure 4, la largeur de la bande de fréquence dans laquelle la recherche doit être effectuée est d'environ 1323 Hz. Cette bande de fréquence peut être centrée sur une fréquence estimée à laquelle le signal du satellite devrait être reçu sans prendre en compte le mouvement de l'antenne 54 (l'estimation de cette fréquence centrale peut être par exemple basée sur une détermination de l'effet Doppler lié uniquement au déplacement du satellite et à la position relative du satellite par rapport à la dernière position connue du récepteur). Si par exemple la recherche est faite par pas fréquentiel de 200 Hz dans cette bande de fréquence, avec un code d'une longueur de 1023 impulsions, alors il y a $7 \times 1023 = 7161$ combinaisons possibles à prendre en compte pour faire la corrélation du signal. Il faut en effet tester au moins sept sous-bandes fréquentielles de 200 Hz pour balayer entièrement une bande de fréquence de 1323 Hz.

A titre de comparaison, plutôt que d'avoir par exemple à parcourir une bande de fréquence large de 20 kHz avec un pas fréquentiel de 200 Hz pour faire l'acquisition ou la ré-acquisition d'un signal (ce qui correspond à une centaine de possibilités en fréquence), le module d'acquisition 411 du récepteur 410 GNSS pourra alors limiter la bande de fréquence de recherche à une largeur de bande de 1323 Hz pour l'exemple considéré et décrit en référence à la figure 4 (ce qui correspond à sept possibilités en fréquence si un pas fréquentiel de 200 Hz est utilisé). La rapidité de l'acquisition d'un signal satellite est alors grandement augmentée puisqu'il y a environ 14 fois moins de possibilités à prendre en compte pour la corrélation du signal.

De façon encore plus optimale, si le décalage fréquentiel entre le signal émis par le satellite et le signal reçu par l'antenne 54 à un instant donné est connu, alors il est possible de déterminer à quelle fréquence l'antenne 54 reçoit ledit signal à cet instant donné, et il peut suffire de faire des corrélations à cette fréquence particulière pour détecter le signal. La fréquence à laquelle l'antenne 54 reçoit le signal à cet instant donné est obtenue par application du décalage fréquentiel Doppler estimé audit instant à la fréquence théorique d'émission du satellite. La détection du signal est alors encore plus rapide. Dans l'exemple considéré, le nombre de possibilités de corrélation à prendre en compte est divisé par cent.

En permettant ainsi une ré-acquisition rapide du signal grâce à la connaissance de la dynamique du lanceur 50 et de celle de l'antenne 54 du récepteur 410 GNSS, il est possible de conserver des moyens de localisation acceptable du lanceur 50 même dans une situation extrême où le lanceur 50 présente une très forte dynamique, comme par exemple s'il subit un mouvement 51 de rotation autour d'un axe 52 transversal passant par le centre d'inertie 53 du lanceur 50 suite à un dysfonctionnement de propulsion.

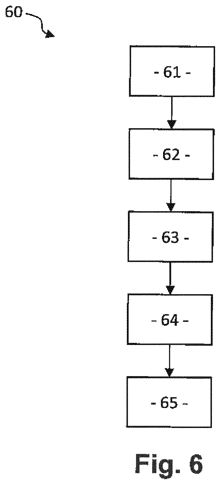

La figure 6 représente schématiquement les principales étapes d'un procédé 60 d'estimation de la position d'un objet mobile susceptible de subir une forte dynamique de rotation sur lui-même, Le procédé 60 est par exemple mis en œuvre par un dispositif 400 de localisation tel que décrit précédemment en référence à la figure 5. Le procédé 60 est par exemple mis en œuvre pour estimer la position d'un lanceur 50 subissant un mouvement 51 de rotation sur lui-même suite à un dysfonctionnement de la propulsion, tel que décrit en référence à la figure 4.

Tel que décrit précédemment, de dispositif 400 de localisation comporte un récepteur 410 d'un système de positionnement par satellites configuré pour fournir des données relatives à une position et une vitesse de l'objet mobile. Le récepteur 410 comprend un module d'acquisition 411 configuré pour effectuer une recherche en fréquence et en code d'un signal émis par un satellite et reçu par une antenne 54 dudit récepteur 410, Le dispositif 410 comporte également une centrale inertielle 420 configurée pour fournir des données relatives à une accélération et une vitesse angulaire de l'objet mobile. Le dispositif 400 de localisation comporte également un module hybride 430 de navigation prenant en entrée des données du récepteur 410 et de la centrale inertielle 420 pour calculer des informations de navigation du lanceur 50.

Le procédé 60 comporte les étapes suivantes :

- une modélisation 61, par le module hybride 430 de navigation, d'un mouvement de l'antenne 54 à partir des données provenant du récepteur 410, des données provenant de la centrale inertielle 420, et de la distance entre l'antenne 54 et un centre d'inertie 53 de l'objet mobile,
- une modélisation 62, par le module hybride 430 de navigation, d'un mouvement du satellite à partir de paramètres orbitaux dudit satellite,
- une estimation 63, par le module hybride 430 de navigation, d'une valeur représentative de l'effet Doppler subi par le signal émis par le satellite en fonction du mouvement modélisé de l'antenne 54 et du mouvement modélisé du satellite,
- une communication 64, par le module hybride de navigation, de ladite valeur représentative de l'effet Doppler au module d'acquisition 411,
- une recherche 65 en fréquence et en code, par le module d'acquisition 411, du signal émis par le satellite, en fonction de la valeur représentative de l'effet Doppler estimée.

La description ci-avant illustre clairement que, par ses différentes caractéristiques et leurs avantages, la présente invention atteint les objectifs fixés.

En particulier, le dispositif 400 de localisation selon l'invention permet de conserver des moyens de localisation du lanceur 50 dans des conditions de dynamique de rotation très forte du lanceur 50 tout en limitant fortement la complexité et le coût dudit dispositif 400 de localisation.

Les solutions de l'état de l'art qui seraient susceptibles de supporter de telles contraintes reposent sur une intégration « ultra serrée » d'un récepteur GNSS avec une centrale inertielle de très haute performance et des algorithmes de traitement du signal particulièrement complexes à mettre en œuvre et à calibrer au niveau du module de suivi 412.

L'invention, quant à elle, requiert uniquement des modifications relativement simples au niveau logiciel dans le module d'acquisition 411 et dans le module hybride 430 de navigation. Aussi, dans un dispositif 400 de localisation selon l'invention, la centrale inertielle 420 n'a pas besoin de présenter des performances particulièrement élevées en termes de stabilité et de bruit.

Il convient de noter que, si l'invention a été présentée pour une utilisation sur un lanceur 50, le dispositif 400 de localisation peut être embarqué dans d'autres véhicules ou objets mobiles susceptibles de subir de fortes dynamiques en rotation.

Aussi, l'invention a été présentée en se concentrant sur l'effet Doppler subi par le signal d'un satellite au niveau d'une antenne 54 du récepteur 410 GNSS. Il est évident que le principe peut s'appliquer à l'ensemble des signaux émis par les différents satellites du système GNSS considéré, et, le cas échéant, à plusieurs antennes du récepteur 410.

**Revendications**

1. Dispositif (400) de localisation, destiné à être embarqué sur un objet mobile susceptible de subir une dynamique de rotation sur lui-même, comportant :

   - un récepteur (410) d'un système de positionnement par satellites configuré pour fournir des données relatives à une position et une vitesse de l'objet mobile, ledit récepteur (410) comprenant un module d'acquisition (411) configuré pour effectuer une recherche en fréquence et en code d'un signal émis par un satellite et reçu par une antenne (54) dudit récepteur (410),
   - une centrale inertielle (420) configurée pour fournir des données relatives à une accélération et une vitesse angulaire de l'objet mobile,

   **caractérisé en ce que** le dispositif (400) de localisation comporte un module de calcul, dit « module hybride (430) de navigation », configuré pour :

   - modéliser un mouvement de l'antenne (54) du récepteur (410) à partir :

     o des données provenant du récepteur (410),
     o des données provenant de la centrale inertielle (420), et
     o de la distance entre l'antenne (54) et un centre d'inertie (53) de l'objet mobile,

   - modéliser un mouvement du satellite à partir de paramètres orbitaux dudit satellite,
   - estimer une valeur représentative de l'effet Doppler subi par le signal émis par le satellite en fonction du mouvement modélisé de l'antenne (54) et du mouvement modélisé du satellite,
   - communiquer ladite valeur représentative de l'effet Doppler au module d'acquisition (411), ledit module d'acquisition (411) étant configuré pour effectuer la recherche en fréquence et en code du signal en fonction de ladite valeur représentative de l'effet Doppler estimée.

2. Dispositif (400) de localisation selon la revendication 1 dans lequel la valeur représentative de l'effet Doppler estimée est un décalage fréquentiel entre le signal émis par le satellite et le signal reçu par l'antenne (54) à un instant donné.

3. Dispositif (400) de localisation selon la revendication 1 dans lequel la valeur représentative de l'effet Doppler estimée est une valeur maximale de la variation d'un décalage fréquentiel entre le signal émis par le satellite et le signal reçu par l'antenne (54) au cours du temps.

4. Dispositif (400) de localisation selon l'une des revendications 1 à 3 dans lequel la valeur représentative de l'effet Doppler est estimée en outre à partir de données brutes du récepteur (410) permettant d'estimer une erreur et une dérive d'une horloge du récepteur (410).

5. Lanceur (50) destiné à lancer un engin spatial dans l'espace extra-atmosphérique, **caractérisé en ce qu'**il embarque un dispositif (400) de localisation selon l'une des revendications 1 à 4.

6. Procédé (60) d'estimation de la position d'un objet mobile susceptible de subir une dynamique de rotation sur lui-même, l'objet mobile embarquant un dispositif (400) de localisation comportant :

   - un récepteur (410) d'un système de positionnement par satellites configuré pour fournir des données relatives à une position et une vitesse de l'objet mobile, ledit récepteur (410) comprenant un module d'acquisition (411) configuré pour effectuer une recherche en fréquence et en code d'un signal émis par un satellite et reçu par une antenne (54) dudit récepteur (410),
   - une centrale inertielle (420) configurée pour fournir des données relatives à une accélération et une vitesse angulaire de l'objet mobile,

   ledit procédé étant **caractérisé en ce qu'**il comporte :

- une modélisation (61), par un module de calcul du dispositif (400) de localisation, dit « module hybride (430) de navigation », d'un mouvement de l'antenne (54) du récepteur (410) à partir :

  o des données provenant du récepteur (410),
  o des données provenant de la centrale inertielle (420), et
  o de la distance entre l'antenne (54) et un centre d'inertie (53) de l'objet mobile,

- une modélisation (62), par le module hybride (430) de navigation, d'un mouvement du satellite à partir de paramètres orbitaux dudit satellite,
- une estimation (63), par le module hybride (430) de navigation, d'une valeur représentative de l'effet Doppler subi par le signal émis par le satellite en fonction du mouvement modélisé de l'antenne (54) et du mouvement modélisé du satellite,
- une communication (64), par le module hybride de navigation, de ladite valeur représentative de l'effet Doppler au module d'acquisition (411),
- une recherche (65) en fréquence et en code, par le module d'acquisition (411), du signal émis par le satellite, en fonction de la valeur représentative de l'effet Doppler estimée.

**Patentansprüche**

1. Ortungsvorrichtung (400), bestimmt, um auf einem mobilen Objekt mitgenommen zu werden, geeignet, um an sich selbst eine Rotationsdynamik zu erfahren, beinhaltend:

   - einen Empfänger (410) eines globalen Navigationssatellitensystems, konfiguriert, um Daten bezüglich einer Position und einer Geschwindigkeit des mobilen Objekts bereitzustellen, wobei der Empfänger (410) ein Erfassungsmodul (411) umfasst, konfiguriert, um eine Suche in der Frequenz und im Code eines Signals durchzuführen, das von einem Satelliten gesendet und von einer Antenne (54) des Empfängers (410) empfangen wurde,
   - eine inertiale Messeinheit (420), konfiguriert, um Daten bezüglich einer Beschleunigung und einer Winkelgeschwindigkeit des mobilen Objekts bereitzustellen, **dadurch gekennzeichnet, dass** die Ortungsvorrichtung (400) ein Berechnungsmodul, "Hybrid-Navigationsmodul (430)" genannt, beinhaltet, konfiguriert, zum:
   - Modellieren einer Bewegung der Antenne (54) des Empfängers (410), ausgehend von:

     -- den Daten, die vom Empfänger (410) stammen,
     -- den Daten, die von der inertialen Messeinheit (420) stammen, und
     -- der Distanz zwischen der Antenne (54) und einem Massenmittelpunkt (53) des mobilen Objekts,

   - Modellieren einer Bewegung des Satelliten, ausgehend von Orbitalparametern des Satelliten,
   - Schätzen eines repräsentativen Wertes für den Doppler-Effekt, dem das vom Satelliten gesendete Signal ausgesetzt ist, in Abhängigkeit der modellierten Bewegung der Antenne (54) und der modellierten Bewegung des Satelliten,
   - Übermitteln des repräsentativen Wertes für den Doppler-Effekt an das Erfassungsmodul (411), wobei das Erfassungsmodul (411) konfiguriert ist, um die Suche in der Frequenz und im Code des Signals durchzuführen, in Abhängigkeit des geschätzten repräsentativen Wertes für den Doppler-Effekt.

2. Ortungsvorrichtung (400) nach Anspruch 1, wobei der geschätzte repräsentative Wert für den Doppler-Effekt eine Frequenzverschiebung zwischen dem vom Satelliten gesendeten Signal und dem von der Antenne (54) zu einem bestimmten Zeitpunkt empfangenen Signal ist.

3. Ortungsvorrichtung (400) nach Anspruch 1, wobei der geschätzte repräsentative Wert für den Doppler-Effekt ein maximaler Wert der Veränderung einer Frequenzverschiebung zwischen dem vom Satelliten gesendeten Signal und dem von der Antenne (54) im Zeitverlauf empfangenen Signal ist.

4. Ortungsvorrichtung (400) nach einem der Ansprüche 1 bis 3, wobei der repräsentative Wert für den Doppler-Effekt ferner ausgehend von Rohdaten des Empfängers (410) geschätzt wird, um einen Fehler und eine Drift eines Takts des Empfängers (410) schätzen zu können.

5. Startgerät (50), bestimmt, um ein Raumfahrzeug in den Weltraum zu starten, **dadurch gekennzeichnet, dass** es eine Ortungsvorrichtung (400) nach einem der Ansprüche 1 bis 4 mitnimmt.

6. Verfahren (60) zur Schätzung der Position eines mobilen Objekts, geeignet, um an sich selbst eine Rotationsdynamik zu erfahren, wobei das mobile Objekt, das eine Ortungsvorrichtung (400) mitnimmt, beinhaltet:

   - einen Empfänger (410) eines globalen Navigationssatellitensystems, konfiguriert, um Daten bezüglich einer Position und einer Geschwindigkeit des mobilen Objekts bereitzustellen, wobei der Empfänger (410) ein Erfassungsmodul (411) umfasst, konfiguriert, um eine Suche in der Frequenz und im Code eines Signals durchzuführen, das von einem Satelliten gesendet und von einer Antenne (54) des Empfängers (410) empfangen wurde,
- eine inertiale Messeinheit (420), konfiguriert, um Daten bezüglich einer Beschleunigung und einer Winkelgeschwindigkeit des mobilen Objekts bereitzustellen, wobei das Verfahren **dadurch gekennzeichnet ist, dass** es beinhaltet:
- eine Modellierung (61) einer Bewegung der Antenne (54) des Empfängers (410) durch ein Berechnungsmodul der Ortungsvorrichtung (400), "Hybrid-Navigationsmodul (430)" genannt, ausgehend von:

-- den Daten, die vom Empfänger (410) stammen,
-- den Daten, die von der inertialen Messeinheit (420) stammen, und
-- der Distanz zwischen der Antenne (54) und einem Massenmittelpunkt (53) des mobilen Objekts,

- eine Modellierung (62) einer Bewegung des Satelliten durch das Hybrid-Navigationsmodul (430) ausgehend von Orbitalparametern des Satelliten,
- eine Schätzung (63), durch das Hybrid-Navigationsmodul (430), eines repräsentativen Wertes für den Doppler-Effekt, dem das vom Satelliten gesendete Signal ausgesetzt ist, in Abhängigkeit der modellierten Bewegung der Antenne (54) und der modellierten Bewegung des Satelliten,
- eine Mitteilung (64), durch das Hybrid-Navigationsmodul, des repräsentativen Wertes für den Doppler-Effekt an das Erfassungsmodul (411),
- eine Suche (65), durch das Erfassungsmodul (411), in der Frequenz und im Code des Signals, das vom Satelliten gesendet wurde, in Abhängigkeit des geschätzten repräsentativen Wertes für den Doppler-Effekt.

## Claims

1. A location device (400), intended to be embedded on a mobile object likely to undergo a dynamic rotation on itself, including:

- a receiver (410) of a satellite positioning system configured to provide data relating to a position and a speed of the mobile object, said receiver (410) comprising an acquisition module (411) configured to perform a frequency and code search of a signal emitted by a satellite and received by an antenna (54) of said receiver (410),
- an inertial unit (420) configured to provide data relating to an acceleration and an angular velocity of the mobile object,

**characterised in that** the location device (400) includes a calculation module, called a "hybrid navigation module (430)", configured to:

- model a movement of the antenna (54) of the receiver (410) from:

-- data from the receiver (410),
-- data from the inertial unit (420), and
-- the distance between the antenna (54) and a centre of inertia (53) of the mobile object,

- model a movement of the satellite from orbital parameters of said satellite,
- estimate a value representative of the Doppler effect undergone by the signal emitted by the satellite depending on the modelled movement of the antenna (54) and the modelled movement of the satellite,
- communicate said value representative of the Doppler effect to the acquisition module (411), said acquisition module (411) being configured to perform the frequency and code search of the signal depending on said value representative of the estimated Doppler effect.

2. The location device (400) according to claim 1, wherein the value representative of the estimated Doppler effect is a frequency offset between the signal emitted by the satellite and the signal received by the antenna (54) at a given time.

3. The location device (400) according to claim 1, wherein the value representative of the estimated Doppler effect is a maximum value of the variation of a frequency offset between the signal emitted by the satellite and the signal received by the antenna (54) over time.

4. The location device (400) according to one of claims 1 to 3, wherein the value representative of the Doppler effect is further estimated from raw data from the receiver (410) allowing estimating an error and a drift of a clock of the receiver (410).

5. A launcher (50) intended to release a spacecraft into outer space, **characterised in that** it embeds a location device (400) according to one of claims 1 to 4.

6. A method (60) for estimating the position of a mobile object likely to undergo a dynamic rotation on itself, the mobile object carrying a location device (400) including:

- a receiver (410) of a satellite positioning system configured to provide data relating to a position and a speed of the mobile object, said receiver (410) comprising an acquisition module (411) configured to perform a frequency and code search of a signal emitted by a satellite and received by an antenna (54) of said receiver (410),
- an inertial unit (420) configured to provide data relating to an acceleration and an angular velocity of the mobile object,

said method being **characterised in that** it includes:

- a modelling (61), by a calculation module of the location device (400), called "hybrid navigation module (430)", of a movement of the antenna (54) of the receiver (410) from:

-- data from the receiver (410),
-- data from the inertial unit (420), and
-- the distance between the antenna (54) and a centre of inertia (53) of the mobile object,

- a modelling (62), by the hybrid navigation module (430), of a movement of the satellite from orbital parameters of said satellite,
- an estimation (63), by the hybrid navigation module (430), of a value representative of the Doppler effect undergone by the signal emitted by the satellite depending on the modelled movement of the antenna (54) and the modelled movement of the satellite,
- a communication (64), by the hybrid navigation module, of said value representative of the Doppler effect to the acquisition module (411),
- a frequency and code search (65), by the acquisition module (411), of the signal emitted by the satellite, depending on the value representative of the estimated Doppler effect.

**Fig. 1**

**Fig. 2**

**Fig. 3**

**Fig. 4**

**Fig. 5**

60

```
┌──────────┐
│   - 61 - │
└────┬─────┘
     │
     ▼
┌──────────┐
│   - 62 - │
└────┬─────┘
     │
     ▼
┌──────────┐
│   - 63 - │
└────┬─────┘
     │
     ▼
┌──────────┐
│   - 64 - │
└────┬─────┘
     │
     ▼
┌──────────┐
│   - 65 - │
└──────────┘
```

## Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2007118286 A1
- US 20050114023 A1